Europäisches Patentamt

European Patent Office

Office européen des brevets

(11) Publication number: **0 282 265**
**A2**

(12) **EUROPEAN PATENT APPLICATION**

(21) Application number: **88302013.3**

(22) Date of filing: **07.03.88**

(51) Int. Cl.⁴: **G01S 15/89 , G01S 13/90**

(30) Priority: **05.03.87 GB 8705147**

(43) Date of publication of application:
**14.09.88 Bulletin 88/37**

(84) Designated Contracting States:
**BE FR GB NL SE**

(71) Applicant: **BRITISH AEROSPACE PUBLIC LIMITED COMPANY**
**11 Strand**
**London WC2N 5JT(GB)**

(72) Inventor: **Gapper, Glenn R. British Aerospace Public Ltd. Co.**
**Sowerby Research Centre F.P.C. 267, P.O. Box 5**
**Filton Bristol, BS12 7QW(GB)**

(74) Representative: **Newell, William Joseph et al**
**D. Young & Co., 10 Staple Inn**
**London WC1V 7RD(GB)**

(54) **Imaging systems.**

(57) An imaging system, e.g. a synthetic aperture sonar system, transmits a family of coded waveforms with the property that each waveform has a delta-like autocorrelation function and a negligible correlation with the other members of the family. The system thus maintains several independent pulses in the transmission medium at any one time, with the consequence that it is possible to obtain rapid coverage of the area surveyed.

FIG.2

## IMAGING SYSTEMS

This invention relates to imaging systems and in particular, though not exclusively to synthetic aperture sonar systems. The principles described and embodied herein may however be used in other imaging systems, for example in synthetic aperture radar systems.

High resolution rapid coverage side-scan sonar systems find applications in many areas, for example geological surveying of the sea bed, pipeline inspection, mine-hunting etc. In existing side-scan sonar systems, the area swept by the imaging system per unit time as the transducer is towed through the water can be shown to be limited by the propagation velocity of the acoustic signal, i.e. the speed of sound in water. For conventional systems it is necessary that the echo from a pulse be received before the next pulse, in order to avoid ambiguities in the range data collected. Thus the maximum range requirement in these conventional systems determines the upper limit for the pulse repetition frequency of the transducer. The pulse repetition frequency determines the maximum allowable velocity of the transducer as it travels along. The lower the pulse repetition frequency, the slower the vehicle must travel. It will be appreciated therefore that as the range of the transducer is increased, the maximum velocity of the transducer must be decreased and vice versa. The practical effect is that the area of the swathe swept by the transducer is limited. For example it can be shown that a conventional synthetic aperture side-scan sonar having a transducer length of 20 cm and travelling through the sea at 3 m/s would have a maximum unambiguous range of about 25 m.

Griffifths J.W.R. "High Resolution Sonar System" Proc Oceanology International '78, Brighton 1978 discloses a system in which the maximum achievable range is approximately 200 m. It has been proposed to obtain full coverage at ship velocities of about 4 knots by using within-pulse scanning (sector scanning). This system has a range resolution of 7.5 cm and an azimuthal resolution of 0.3°. Thus, at maximum range, the spatial azimuth resolution would be approximately 1.1 m.

US Patent No. 4, 400, 803 discloses a system in which a series of acoustic pulses at a range of independent frequencies is transmitted at the same time. The echoes are filtered using band-pass filters and then demodulated for bandwidth compression in the conventional manner. It is believed however that the described system will not produce high resolution information because only a limited number of independent pulses may be accomodated in the frequency band, even if the band extends down to D.C. Depending on the maximum range and ship velocity the number of independent frequencies available may be insufficient. In addition it is well known that back scattering and attenuation are frequency dependent and thus the use of different frequencies for the pulses will introduce inhomogeneities into the system. Also the system includes an interferometer and it is believed to be impractical to design an interferometer capable of handling signals with such widely varying frequencies.

In conventional sonar and radar systems intended to provide an indication of a moving target (MTI) there is a similar physical limitation on operation of the system. As the required maximum range increases, so the pulse repetition frequency (p.r.f) must be decreased to suit the maximum echo time. However the maximum unambiguous target speed which can be detected is also dependent on the p.r.f. To increase the unambiguous speed to be detected, the p.r.f. must be increased, and thus, in conventional systems, the only certain way of detecting higher unambiguous target speeds is by reducing the maximum range, but the situation can be improved by staggering the p.r.f.

We have found that it is possible to design an imaging system which allows a higher effective p.r.f. to be achieved which is not limited by the maximum range to be surveyed. Embodiments of such a system, when implemented in sonar applications, allow the speed of coverage surveyed by the sonar to be increased well beyond the limits usually thought possible whilst maintaining a high azimuth and spatial resolution. In both sonar and moving target indicators embodying the invention, it is possible to increase the maximum range surveyed without a corresponding reduction in the detected maximum unambiguous speed of the target.

According to one aspect of this invention, there is provided an imaging system comprising:-

transducer means movable along a given path and including emitter means and receiver means for emitting and receiving respectively in a direction generally transverse to said path;

code generator means operable to generate and supply to said emitter means a relatively narrow band emission signal comprising a plurality of coded waveforms each having a substantially delta-like auto-correlation function and a relatively low cross-correlation function;

decoder means for receiving the output signal of said receiver means and for decoding the output signal thereby to extract response data relating to each of said plurality of coded waveforms.

According to another aspect of this invention, there is provided a synthetic aperture sonar system comprising transducer means movable along a given path and having emitter means and receiver means for emitting and receiving a sonar signal in a direction generally transverse to said given path, code generator means for supplying to said emitter means a plurality of coded waveforms each having a substantially delta-like auto-correlation function and a relatively low cross-correlation function and decoder means for decoding the output signal of the receiver means thereby to extract response data relating to each of said plurality of coded waveforms.

The invention will now be described by way of non-limiting example, reference being made to the accompanying drawings, in which:-

Figure 1 is a diagrammatic view of a ship trailing a sonar transducer;

Figure 2 is a block diagram illustrating the elements of a synthetic aperture side-scan sonar system in accordance with an embodiment of the invention;

Figure 3 is a schematic view of a finite impulse response (FIR) filter.

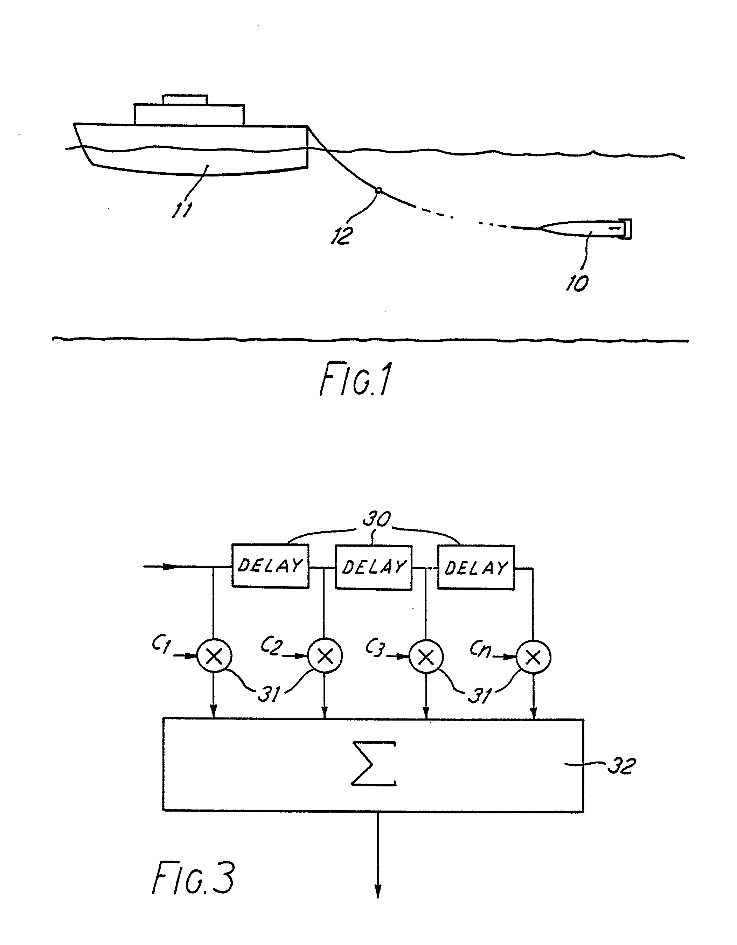

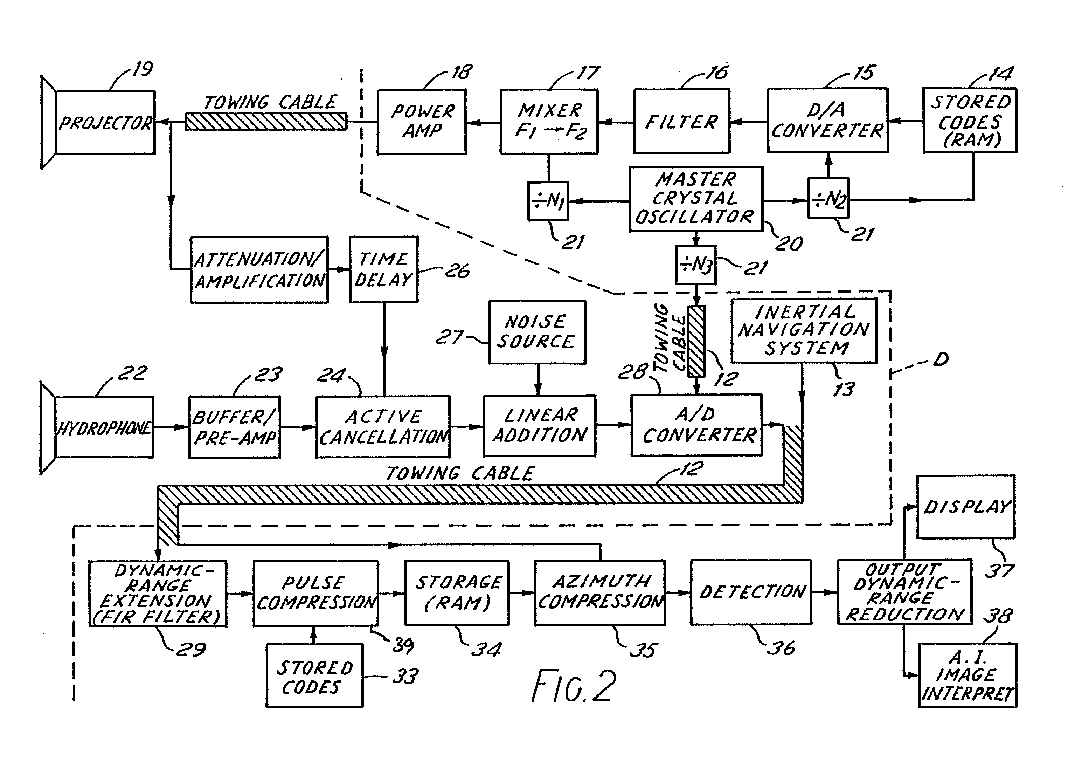

Referring initially to Figure 1, the system comprises a towfish 10 connected to a ship 11 by means of a towing cable 12, which also serves to transmit digital data and, if required, power between the towfish and the ship. In this embodiment, the towfish is towed at a velocity of 3 m/s (6 knots) at a height of roughly 15 m from the sea bed. The towfish incorporates an inertial navigation system 13 and associated control members and/or control jets (not shown) to cause the towfish to follow a predetermined course.

The embodiment of the system described is intended to provide a resolution of 10 cm x 10 cm over a range of 200 m and at ship velocities of 3 m/s (6 knots).

Referring to Figure 2, the shipboard elements of the system are distinguished from the elements housed on board the towfish by means of a dotted line D. The shipboard elements include a random access memory (RAM) 14 which stores in digital form data representing a series of coded waveforms. In the embodiment of Figure 2 the RAM 14 stores baseband data which is later mixed up to the carrier frequency. The RAM 14 supplies digital data to a D/A converter 15, and the output analog signal is supplied to a filter 16 thence to a mixer 17 where it is mixed up to the carrier frequency. In this instance $4Br_m/c$ digital words of RAM are required where $r_m$ is the maximum range, B is the bandwidth and c the propogation velocity. A slight variation on the described embodiment which removes the need for a mixer but increases the amount of memory required to store the codes, is to store samples of the full waveform at twice the highest frequency present. This would require a minimum of $4fr_m/c$ digital words of RAM where f is the highest frequency.

The output of the mixer 17 is amplified by amplifier 18 and supplied to a projector 19 via the towing cable 12. The RAM 14, D/A converter 15, and mixer 17 are operated under the control of a master crystal oscillator 20 and associated frequency dividers 21. The projector 18 is typically 20 cm long and one wavelength wide. As well as the projector 19, the towfish 10 houses a hydrophone 22. The output of the hydrophone is amplified by a buffer/pre-amplifier 23 and then subjected at 24 to an active noise cancellation process designed to minimise the level of sound that the hydrophone receives directly from the projector. In the noise cancellation technique, the signal supplied to the projector is attenuated or amplified at 25, subjected to a variable time delay at 26 and then combined with the output signal from the hydrophone. In addition, the projector and the hydrophone are placed in the nulls of each other's beam response and sound absorbing material is placed between the hydrophone and the projector.

Following the active noise cancellation at 24, random noise from noise source 27 is added to the signal before being digitised by an A/D converter 28 controlled by the master oscillator 20 via the towing cable 12. The noise has a flat spectrum up to half the sample frequency of the A/D converter 28 and an rms value roughly corresponding to the 1-bit level of the A/D converter. The A/D converter digitises the signal at a sample rate which is at least twice the bandwidth signal and, in this design, it is much greater than twice the highest frequency (it oversamples). Preferably, the sample frequency is a multiple of four times the carrier frequency. This permits easy extraction of the in-phase and quadrature signal components. Following digitisation, the signal is transmitted to the ship via the towing cable 12. As mentioned previously, the towfish also includes an inertial navigation system 13 which supplied navigation data to the ship via the towing cable 12.

On board the ship, the digitised output signal of the hydrophone is supplied to a finite impulse response (FIR) filter 29. A schematic representation of the FIR filter is shown in Figure 3. Referring to Figure 3 an input signal is passed through a series of delay stages 30 which delay the input by one clock cycle. Before each delay stage, the signal is tapped and passed to a multiplier 31 where it is multiplied by a respective settable coefficient $C_i.....C_n$. The outputs of all the multipliers are supplied to an accumulator 32 of increased dynamic range where they are summed in each clock cycle to provide an output. The A/D Converter and the FIR filter are both controlled by the master oscillator 20. Examples of FIR filter chips are the IMS A 100 chip which has a 32-stage 16-bit data and 16 bit coefficient capability at a throughput rate of 2.5 MHz from Inmos Limited, Bristol, England, and the DSP 56200 chip from Motorola Inc. which can be programmed with 256 24-bit coefficients. The Motorola chip can handle 16-bit data at a rate of 10.25 MHz and has a 40 bit accumulator with programmable, automatic rounding to any desired output resolution. In the present arrangement the FIR filter 29 accumulates and performs an averaging process on successive data words supplied to the filter.

It will be understood that, if all the coefficients $C_1....C_n$ are set to 1, then the accumulator output will correspond to the numerical total of n sequential outputs from the A/D converter. Because the analogue input to the A/D converter includes random noise at the 1-bit level, if the level of the analogue signal when untreated (i.e. without the noise) is near a quantum threshold of the converter, then in a series of successive samples of the signal when treated (i.e. with noise), some will fall in an upper quantum band and some will fall in a lower band. The ratio of the numbers falling in each band will thus give an indication of the level of the untreated signal relative to the quantum level. Thus by accumulating the data from successive samples using an accumulator of increased dynamic range, the output of the accumulator will be digital signal of increased resolution representing the level of the analogue signal.

Following extension of the dynamic range, the signal is subjected to a pulse compression process. In this process the input waveform is correlated with each of the coded waveforms in turn. The correlation process performs the dual function of decoding and pulse compressing the response data. Because the coded waveforms input into the system are selected to have delta-like auto-correlation functions and negligible cross-correlation functions, correlation of the waveform received from the FIR filter with a particular coded waveform will extract only the response data for that particular waveform. During the pulse compression step, data representative of replicas of the various coded waveforms is read out from the RAM 33 and used in the correlation process.

The correlation process may also be carried out using an FIR filter supplied from RAM 33 with coefficients representing replicas of the coded waveforms supplied to the projector, and controlled so as to correlate the digitised signal from the hydrophone with the stored codes in sequence. The correlation may also be performed in parallel using a separate filter for each code waveform. The output signal is a train of data representing the response data of each of the transmitted codes.

The response data is stored in RAM 34 in terms of range (i.e. time after transmission of each pulse) and distance along the transducer trajectory. Following pulse compression, the signal represents in serial form the response data at each of a series of points along the path of the transducer.

Although in the illustrated embodiment the dynamic range extension technique and the pulse compression are shown as separate steps, they may be carried out using as a single step by combining the functions of pulse compression and dynamic range extension using parallel FIR filters supplied with the coded replicas from code store 33. In this case, provided that the accumulator of the FIR filter 29 has sufficient dynamic range, the filter 29 may be controlled to perform the various averaging functions necessary for extension of the dynamic range at the same time as the correlation necessary for pulse compression.

The data from the RAM 34 is then subjected at 35 to azimuth compression. In this process, the stored data is adjusted by applying complex weighting and, possibly, time delays to focus the array to take account of the spherical wavefront of the echo. It will be understood that, beyond a certain range, the curvature of the wavefront is negligible and thus that no focussing is necessary. The azimuth compression step requires a knowledge of the position of the towfish and this is supplied by the inertial navigation system 13 on board the towfish. The data may also be weighted to allow aperture shading.

Following azimuth compression, if appropriate, the image data is supplied to a detector 36, and then, following dynamic range reduction the image data may be displayed on e.g. a VDU 37, or supplied to a processor 38 for applying artificial intelligence or image processing techniques to interpret the image data received.

Having now described the various elements of the synthetic aperture system, there will now follow a discussion of the more general consideration involved in operation of the system.

The synthetic aperture radar technique has been widely used (see for example Chapter 23 "Radar Handbook", Ed M. Skolnick. McGraw Hill 1970). Four of the advantages of using the synthetic aperture technique are as follows:

(i) High spatial azimuth resolution may be obtained which is comparable with achievable range resolutions. The range resolution limit is approximately c/2B where c is the wave propagation velocity and B is the signal bandwidth.

(ii) The technique yields a spatial azimuth resolution which is approximately equal to half the physical size of the antenna (or acoustic transducer) and thus is suitable for small vehicles.

(iii) The spatial azimuth resolution is independent of range and wavelength.

(iv) The normal radar law which described the dependence of signal power on range due to spherical spreading ($1/r^4$) is replaced by an inverse cube law ($1/r^3$) and thus greater ranges are achievable.

Synthetic aperture radar techniques are generally used in side-looking configurations and make use of the fact that backscattering elements at different azimuthal positions can be distinguished by their Doppler frequency shifts.

Consider an antenna of physical length d which radiates and receives a narrow-band signal which is centred at frequency f. If the antenna is translated at velocity v, the carrier frequency will be Doppler shifted by $(2v \sin \theta)/\lambda$. Thus the spread in Doppler frequency shifts (the Doppler bandwidth) encompassed by the beam of width $2\theta = \lambda/d$ would be $2v/d$. The spatial azimuth resolution would be given by the translation velocity divided by the Doppler bandwidth and, hence, would be equal to d/2. According to the Nyquist criterion the sampling frequency (or pulse repetition frquency), PRF should correspond to the Doppler bandwidth of the signal and, therefore, PRF = $2v/d$. This would permit an unambiguous maximum range $r_m$ = c/2 PRF = cd/4v.

When practicable figures for a conventional sonar system are used to calculate the maximum unambiguous range (e.g. c = 1500m/s, d = 20cm, v = 3m/s), it is found that only a modest maximum range can be achieved (e.g. 25m) which in general is not useful for mine hunting or other similar activities (e.g. high resolution acoustic imaging for the oil industry). Without further modification of the technique, one could extend the maximum unambiguous range by reducing the vehicle velocity v but this would restrict the rate of coverage.

In the illustrated embodiment an enhanced range and vehicle velocity is achieved by a technique which increases the effective PRF and which overcomes the limitation described above. A family of large BT-product (bandwidth-time product) coded waveforms are transmitted which have the property that each waveform has a delta-like autocorrelation function and has a negligible cross-correlation function with the other members of the family. In this way several effectively independent pulses are maintained in the water at the same time. In other words, it is not necessary to wait for a pulse to travel to the maximum range and return before transmitting the next pulse. The information relating to an individual pulse is extracted upon reception by passing the signals through the equivalent of a set of filters matched to the particular codes.

With the acoustic frequencies applicable to sonar and the signal bandwidths of interest here it is a simple matter to generate any desired waveform. The high processing rate of the received signals is believed to be within the scope of current technology but may, if required, be achieved by parallel computer architectures and the associated processing units.

As described earlier, the Nyquist criterion and relatively slow velocity of sound limit the vehicle velocity and maximum unambiguous range. The described embodiment overcomes this limitation by transmitting in sequence the members of a family of coded waveforms. The sequence should be repeated at the conventional PRF rate (or less). For reasonable length codes this means that transmissions occur continuously (i.e. the individual codes are joined 'end-to-end' or 'overlap') and this has other interesting consequences for system design.

A possible system will now be described with some numerical values as examples. Consider a side-scan system which would achieve a maximum range of 200m and yield a spatial resolution of 10cm by 10cm at ship velocities up to 6 knots (3m/s). In order to achieve a spatial azimuth resolution of 10cm the physical length of the transducer arrays should be roughly 20cm and a ship velocity of 3m/s would imply that an effective PRF of 30Hz should be used. A vertical beam width of 60° can be obtained from a transducer of width approximately one wavelength.

Since the 'round trip' time to maximum range and back would be 0.27s, 8 individual codes would be required. If the sonar were to be operated in a continuous mode (the coded waveforms joined end-to-end or overlapping) then each code could have a duration longer than 33ms (but no longer than 0.27s). In order to obtain 10cm resolution in range the signal bandwidth should be greater than about 7.5Hz and this provides an absolute lower limit on the carrier frequency. The BT product would then fall in the range 7500 x 0.033 = 248 to 7500 x 0.27 = 2025.

The coded waveforms have amplitudes and/or phases which vary as a function of time. Referring now to the factors affecting the choice of waveform the bandwidth of the signal determines the range resolution limit and so a minimum bandwidth must be maintained. To obtain good signal-to-noise ratios and high rejections between the individual codes, large BT products are used. In the design of the waveforms the full 2D ambiguity function would have to be optimised. The ideal ambiguity function would be of the so-called 'thumbtack' form. Suitable types of codes are polyphase codes or codes based upon Fourier series with the phase as a function of frequency providing the free parameters with which to optimise the ambiguity functions and cross-correlation functions. The latter, Fourier series, approach would result in a periodic waveform which should have its period made equal to the round-trip time to maximum range and back. If the individual pulses 'overlap' the transmission would consist of the sum of the pulses.

Recently a stochastic optimisation technique (employing simulated annealing) has been used to design pairs of waveforms with correlation properties similar to those required for the present embodiments of the invention; see for example Kirkpatrick, S., Gelatt Jr., C.D., and Vecchi, M.P., "Optimisation by Simulated Annealing", Science, Vol. 220, No. 4598, pp 671-680, May 1983. A pair of polyphase codes each with a BT product of 100, having an auto-correlation function with sidelobes lower than -25dB and a cross-correlation function with values corresponding to a rejection better than 25dB have been designed. The selection of appropriate waveforms satisfying the criteria set out above is believed to be well within the competence of one skilled in the art.

In a modification of the arrangement illustrated in Figure 1, the system may provide data for a moving target indicator. Because of the increase in the effective pulse repetition frequency, the range of the system may be increased without requiring a related decrease in the maximum unambiguous detection speed. This is because with the described system it is possible to have several coded waveforms in the water at the same time each of which is independent from the others and each of which can be decoded to obtain the respective response data. In a similar arrangement, not shown, a radar system transmits coded waveforms having a delta-like auto-correlation function and negligible cross-correlation functions, and similar pulse compression and processing is carried out as in the sonar system. As with the sonar system, the advantage of this system in radar is that it is possible to maintain several mutually independent coded waveforms in the transmission medium at the same time so that the effective pulse repetition frequency can be increased without reducing the maximum range. The increase in pulse repetition frequency allows a MTI system to be configured in which the maximum unambiguous speed of target which may be detected is higher than previously considered theoretically possible.

## Claims

1. An imaging system comprising:-
transducer means (10) movable along a given path and including emitter means (19) and receiver means (22) for emitting and receiving respectively in a direction generally transverse to said path;
code generator means (14 to 18) operable to generate and supply to said emitter means a relatively narrow band emission signal comprising a plurality of coded waveforms each having a substantially delta-like auto-correlation function and a relatively low cross-correlation function;
decoder means (18 to 34) for receiving the output signal of said receiver means and for decoding the output signal thereby to extract response data relating to each of said plurality of coded waveforms.

2. An imaging system according to claim 1, wherein said response data is stored and processed to provide data representative of a synthetic aperture image of the region swept by said transducer means.

3. An imaging system according to claim 1 or claim 2, wherein said transducer means emits and receives sound waves.

4. An imaging system according to any one of claims 1 to 3, wherein said decoder means (28 to 34) includes correlation means (39) for correlating the emission signal with the output signal of said receiver means thereby to extract and pulse-compress response data relating to each of said plurality of coded wave forms.

5. An imaging system according to any one of claims 1 to 4, wherein said decoder means (28 to 34) includes means (35) for adjusting the amplitude, weighting means for adjusting the phase weighting and means for adjusting the time delay of said response data thereby to effect focussing of the image sensed by said system.

6. An imaging system according to any one of claims 1 to 5, wherein said code generator means (14 to 18) includes store means (14) for storing in digital form data representative of the base band of the coded waveform digital to analog converter means (15) for converting said data, oscillator means (20) for generating a carrier frequency and mixer means (17) for mixing up the waveform from said converter means to said carrier frequency.

7. An imaging system according to any one of claims 1 to 5, wherein said code generation means (14 to 18) includes store means for storing data representative of the coded waveform and means for outputting data from said store thereby to generate said coded waveform.

8. A synthetic aperture sonar system comprising transducer means (10) movable along a given path and having emitter means (19) and receiver means (22) for emitting and receiving a sonar signal in a direction generally transverse to said given path, code generator means (14 to 18) for supplying to said emitter means (19) a plurality of coded waveforms, each having a substantially delta-like auto-correlation function, and a relatively low cross-correlation function and decoder means for decoding the output signal of the receiver means (28 to 34) thereby to extract response data relating to each of said plurality of coded waveforms.

9. A synthetic aperture sonar system according to claim 8, wherein said system includes a host vehicle (11) and a transducer vehicle (10) and means (12) for transmitting data between said vehicles, said transducer vehicle (10) housing said transducer means and said host vehicle housing said code generator means (14 to 18) and said decoder means (28 to 34).

10. A rapid coverage synthetic aperture sonar system comprising:-

a host vehicle (11);

a transducer vehicle (10);

a towing link (12) connecting said host vehicle (11) and said transducer vehicle (10) and including data link means for transferring data between said host vehicle and said transducer vehicle;

a memory (14) for storing data representing a plurality of coded waveforms each having a substantially delta-like autocorrelation function and a relatively low cross-correlation function;

said transducer vehicle housing an emitter means (19) and a receiver means (22) for emitting and receiving sonar signals respectively, signal generator means (15 to 18) responsive to data in said memory for supplying to said emitter a plurality of coded waveforms, and analogue to digital conversion means (28) for digitising the output of the emitter means for transmission to the host link via said data link means,

said host vehicle including pulse compression means (39) responsive to data representative of the coded waveforms to output data representing response data for each of said coded waveforms, store means (34) for storing the data output by said pulse compression means, and means (37) for processing and displaying the data contained in said store to provide an image of the area swept by said transducer vehicle.

FIG.1

FIG.3

0 282 265

PROJECTOR 19

TOWING CABLE

POWER AMP 18

MIXER $F_1 \rightarrow F_2$ 17

FILTER 16

D/A CONVERTER 15

STORED CODES (RAM) 14

$\div N_1$ 21

MASTER CRYSTAL OSCILLATOR 20

$\div N_2$ 21

ATTENUATION/ AMPLIFICATION

TIME DELAY 26

$\div N_3$ 21

NOISE SOURCE 27

TOWING CABLE 28

12

INERTIAL NAVIGATION SYSTEM 13

D

HYDROPHONE 22

BUFFER/ PRE-AMP 23

ACTIVE CANCELLATION 24

LINEAR ADDITION

A/D CONVERTER

TOWING CABLE 12

DISPLAY

DYNAMIC- RANGE EXTENSION (FIR FILTER) 29

PULSE COMPRESSION 39

STORAGE (RAM) 34

AZIMUTH COMPRESSION 35

DETECTION 36

OUTPUT DYNAMIC- RANGE REDUCTION 37

STORED CODES 33

A.I. IMAGE INTERPRET 38

FIG.2